# EUROPÄISCHE PATENTSCHRIFT

(11) **EP 2 801 409 B1**
(45) Veröffentlichungstag und Bekanntmachung des Hinweises auf die Patenterteilung: **08.04.2020**
(21) Anmeldenummer: 14401050.1
(22) Anmeldetag: 05.05.2014
(51) Int. Cl.: B05B 1/16, B05B 1/20, B05B 1/30, B05B 15/50, F16K 31/524, F16K 11/16

(54) **Flüssigkeitsleitung mit zugeordnetem Düsenkörper**
Liquid line with an associated nozzle body
Conduite de liquide dotée d'un corps de tuyère associé

(30) Priorität: 07.05.2013 DE 102013104670
(43) Veröffentlichungstag der Anmeldung: 12.11.2014
(73) Patentinhaber: Amazonen-Werke H. Dreyer GmbH & Co. KG, 49205 Hasbergen (DE)
(72) Erfinder: Austermann, Stefan, 48291 Telgte (DE); Dembeck, Achim, 49191 Belm (DE)

(56) Entgegenhaltungen:
- EP-A1- 2 002 898
- EP-A2- 2 145 981
- WO-A2-2007/100247
- DE-A1-102010 036 437
- US-A- 2 461 617
- US-A- 4 123 006

## Beschreibung

Die Erfindung betrifft eine Flüssigkeitsleitung mit zugeordnetem Düsenkörper gemäß des Oberbegriffes des Patentanspruches 1.

Eine derartige Flüssigkeitsleitung mit zugeordnetem Düsenkörper ist in der DE 10 2010 036 437 A1 beschrieben. Hier zweigt von der Flüssigkeitsleitung in einem Abzweigungsbereich eine Zweigleitung zu der zumindest einen Ausbringdüse des Düsenkörpers ab. Der Abzweigleitung ist zumindest ein Absperrelement aufweisendes Absperrventil zugeordnet. Eine Teilmenge des Flüssigkeitsstromes zweigt zur Ausbringdüse ab. Das Absperrelement wird im Wesentlichen nur umspült, wenn das Absperrelement den Durchfluss in der Zweigleitung zu der Ausbringdüse frei gibt. Insbesondere wenn das Absperrelement den Durchfluss in der Zweigleitung zu der Ausbringdüse absperrt, lagern sich in der Flüssigkeit, wie beispielsweise Pflanzenschutzmittellösungen, befindliche Partikel ab. Durch die Ablagerung der Partikel insbesondere im Absperrbereich der Absperrelemente kommt es zu Veränderungen der Ausbringmenge und zu Problemen beim Absperren der Zweigleitung durch die Absperrelemente.

Der Erfindung liegt die Aufgabe zugrunde, in einfacher Weise zumindest bei der Absperrung der Zweigleitung durch die Absperrelemente eine behindernde Ablagerung von sich in der auszubringenden Flüssigkeit, wie beispielsweise Pflanzenschutzmittellösungen, befindliche Partikel, zu vermeiden.

Diese Aufgabe wird erfindungsgemäß durch die Merkmale des Anspruchs 1 gelöst. Erfindungsgemäß ist unter anderem vorgesehen, dass die Absperrelemente in einem Bereich des Flüssigkeitsstromes liegen und von einem Flüssigkeitsstrom umströmt und/oder umspült werden, der größer als die über die Ausbringdüse ausgebrachte Flüssigkeitsmenge ist.

Infolge dieser Maßnahme wird die Strömung des Flüssigkeitsstromes im Bereich der Absperrelemente soweit erhöht, dass in allen Einsatzfällen immer eine ausreichende Strömung des Flüssigkeitsstromes im Absperrbereich herrscht, damit sich keine Partikel aus dem Flüssigkeitsstrom in die Funktionsweise des Absperrelementes behindernder Weise ablagern können. Hierbei können die Absperrelemente sogar bis in den Hauptflüssigkeitsstrom der Flüssigkeitsleitung hineinragen.

Um sicherzustellen, dass immer eine ausreichend große Flüssigkeitsströmung im Absperrbereich herrscht, ist erfindungsgemäß vorgesehen, dass von der Abzweigleitung in dem Bereich der Absperrelemente eine weitere mit der Flüssigkeitsleitung verbundene und eine Öffnung zur Flüssigkeitsleitung aufweisende Zwischenleitung zugeordnet ist.

Um einen ausreichend großen Flüssigkeitsstrom in sicherer Weise zu entfernt von dem Abzweigbereich angeordneten Absperrelementen zu erreichen, ist vorgesehen, dass in dem Abzweigungsbereich zumindest eine in den freien Querschnitt der Flüssigkeitsleitung hineinragende und zumindest eine stirnseitige Trennkante aufweisende Zwischenwand angeordnet ist, dass zwischen der zumindest einen Trennkante und der Leitungswand der Flüssigkeitsleitung zumindest eine zu der zumindest einen Abzweigleitung führende Öffnung sich befindet, dass auf dem der stirnseitigen Trennkante abgewandten Ende der Zwischenwand zumindest eine weitere die Abzweigleitung mit der Flüssigkeitsleitung verbindende Öffnung angeordnet ist. Hierdurch wird quasi ein Teilstrom durch die eine Trendkante aufweisende Zwischenwand vom Flüssigkeitsstrom abgeschnitten und zwangsweise in die Zweigleitung abgezweigt.

Um eine gezielte Führung des Flüssigkeitsstromes in der Abzweigleitung zu der jeweiligen Ausbringdüse zu erreichen, ist vorgesehen, dass in der Abzweigleitung zumindest eine an der stirnseitigen Trennkante beginnende und zu der zu der jeweiligen Ausbringdüse des Düsenkörpers den Flüssigkeitsstrom leitende Führungswand angeordnet ist.

Damit der überschüssige Flüssigkeitsstrom, welcher nicht der Ausbringdüse zugeführt wird, wieder in die Flüssigkeitsleitung zurückleiten zu können, ist vorgesehen, dass zumindest eine Öffnung an der stirnseitigen Trennkante der Zwischenwand mit zumindest einer weiteren Öffnung an dem Ende der Zwischenwand in Durchflussverbindung steht. Hierdurch wird eine zwangsweise Umspülung der Absperrelemente sichergestellt.

Bei einem als Mehrfachdüsenkörper ausgebildeten Düsenkörper, der über an einer Betätigungsscheibe angeordnete Schaltnocken betätigbare und den an dem Gehäuse des Mehrfachdüsenkörpers angeordnete Ausbringdüsen zugeordnete Absperrventile aufweist, ist vorgesehen, dass zwischen den beiden Seitenflächen der Betätigungsscheibe und den jeweils benachbarten Gehäusewandungen ein von dem Flüssigkeitsstrom durchströmbarer Spaltbereich angeordnet ist, dass die Öffnungen an der Stirnseite und dem Ende der Zwischenwand durch den Spaltbereich zwischen den beiden Seitenflächen der Betätigungsscheibe und den jeweils benachbarten Gehäusewandungen miteinander verbunden sind. Hierdurch wird sichergestellt, dass sich auch in dem Spaltbereich keine Partikel aus dem Flüssigkeitsstrom ablagern können.

Um den auszubringende Flüssigkeitsstrom in gezielter Weise zu der Ausbringdüse zuleiten, ist vorgesehen, dass durch die zumindest eine den Flüssigkeitsstrom leitende Führungswand der Flüssigkeitsstrom zu der zumindest einen an dem Düsenkörper angeordneten Ausbringdüse leitbar ist.

Bei einem Mehrfachdüsenkörper ist vorgesehen, dass die Führungswand als auf der der Abzweigleitung abgewandten Seite der Zwischenwand vorzugsweise kurvenartig verlaufend in Richtung der Ausbringdüse verlaufende Wulst ausgebildet ist. Durch die Wulst wird der Flüssigkeitsstrom aufgeteilt und der jeweiligen Ausbringdüse gezielt zugeleitet.

Weitere Einzelheiten der Erfindung sind der Beispielsbeschreibung und den Zeichnungen zu entnehmen. Hierbei zeigen
- Fig. 1: den Mehrfachdüsenkörper in perspektivischer Ansicht,
- Fig. 2: den Mehrfachdüsenkörper in der Seitenansicht,
- Fig. 3: den Mehrfachdüsenkörper im Bereich der Flüssigkeitsleitung in der Ansicht III - III,
- Fig. 4: den Mehrfachdüsenkörper im Bereich der Flüssigkeitsleitung und im Abzweigbereich der Abzweigleitung in der Ansicht IV - IV,
- Fig. 5: den Mehrfachdüsenkörper in der Vorderansicht,
- Fig. 6: den Mehrfachdüsenkörper in der Ansicht VI - VI,
- Fig. 7: den Mehrfachdüsenkörper in der Seitenansicht,
- Fig. 8: den Mehrfachdüsenkörper in der Ansicht VIII - VIII,
- Fig. 9: den Mehrfachdüsenkörper in der Ansicht IX - IX,
- Fig. 10: den Mehrfachdüsenkörper in der Ansicht X - X mit einer anderen Schaltstellung der Betätigungsscheibe,
- Fig. 11: einen weiteren Mehrfachdüsenkörper in der Ansicht IV - IV und
- Fig. 12: einen weiteren Mehrfachdüsenkörper in der Ansicht IV - IV.

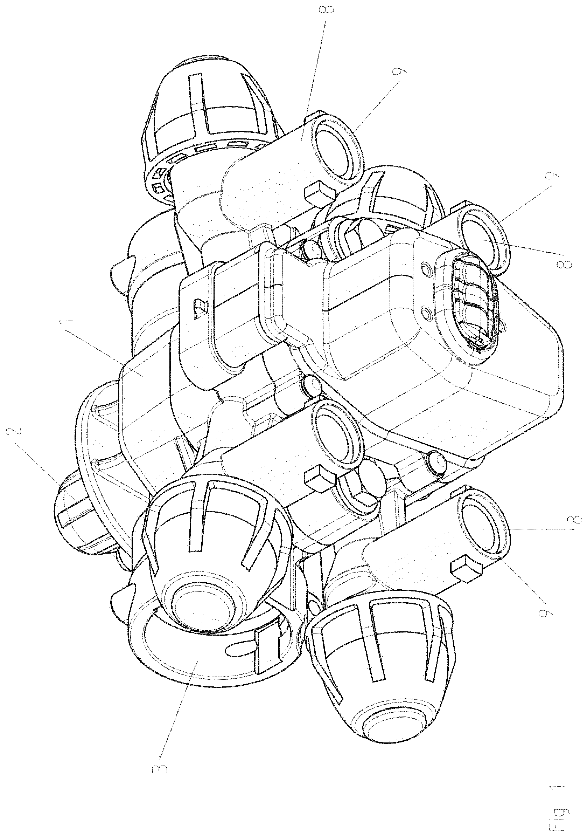

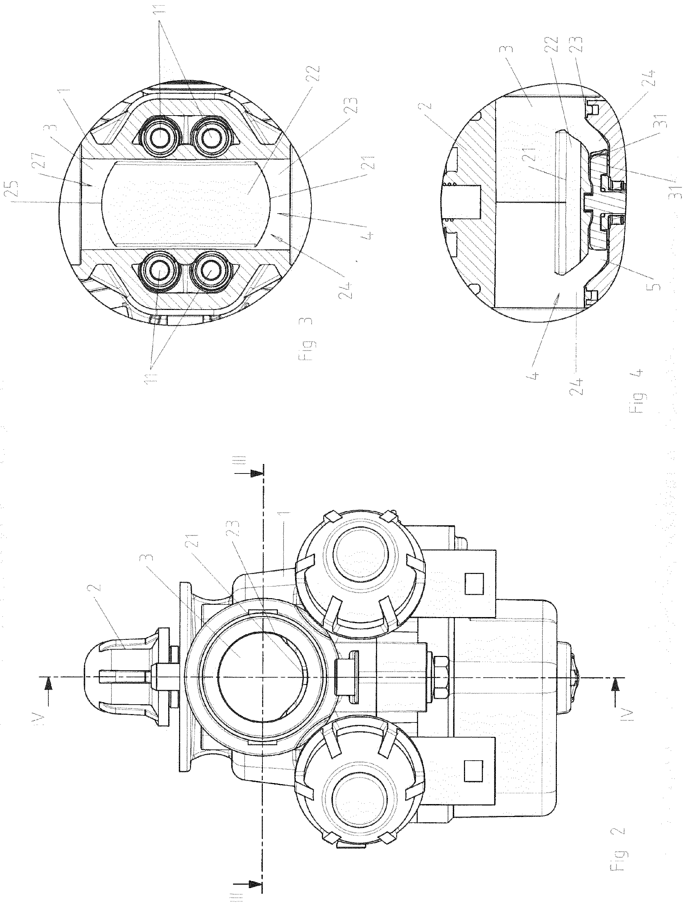

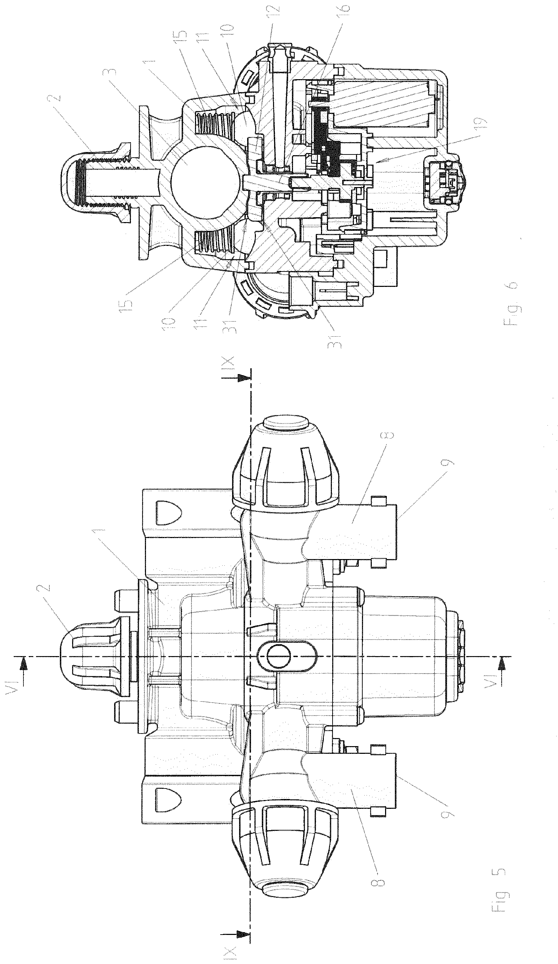

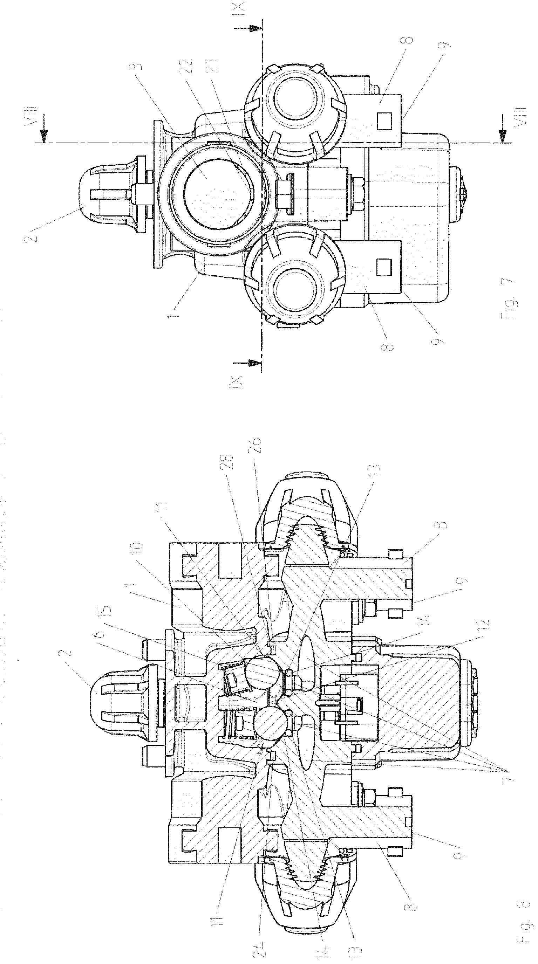

Der Mehrfachdüsenkörper gemäß den Fig. 1 bis 10 weist das Gehäuse 1 auf. An dem Gehäuse ist das Befestigungsmittel 2 angeordnet, mit welchem der Mehrfachdüsenkörper an Rahmenelementen, Verteilergestänge, etc. befestigt werden kann. Im oberen Bereich des Gehäuses 1 des Mehrfachdüsenkörpers ist ein Teil 3 der Flüssigkeitsleitung, an welcher der Mehrfachdüsenkörper anschließbar ist, angeordnet. Über diese Flüssigkeitsleitung, die beispielsweise an einem Verteilergestänge einer landwirtschaftlichen Feldspritze angeordnet ist, ist dem jeweiligen Mehrfachdüsenkörper die auszubringende Flüssigkeit zuzuführen.

Die Flüssigkeitsleitung 3 ist mit der in dem Gehäuse 1 in einem Abzweigbereich 4 angeordneten Abzweigleitung 5 verbunden. Die Abzweigleitung 5 mündet in dem in dem Gehäuse 1 angeordneten Verteilerraum 6 aus. Von diesem Verteilerraum 6 führen, gemäß des Ausführungsbeispiels, vier Verbindungsleitungen 7, die die Verlängerung der Abzweigleitung 5 bilden, zu in dem Gehäuse 1 angeordneten Ausbringleitungen 8, an deren Enden 9 in nicht dargestellter Weise mittels Überwurfmuttern Ausbringdüsen in bekannter Weise angeordnet sind.

Die Verbindungsleitungen 7 sind im Bereich des Verteilerraumes 6 mittels als Absperrelemente 10 aufweisende Absperrventile 11 abzusperren. Über diese Absperrelemente 10 sind die Verbindungsleitungen 7 mit der Zuleitung 5 wahlweise verbindbar und/oder ihr gegenüber absperrbar. Die Absperrelemente 10 sind über schaltbare Betätigungselemente 12 betätigbar und somit in die jeweilige Absperr- oder Durchflussposition zu bringen.

Die Absperrventile 11 weisen jeweils einen in dem Gehäuse 1 angeordneten Ventilsitz 13, dem jeweils ein Dichtring 14 zugeordnet ist, auf. Die Absperrelemente 10 sind kugelartig, im Ausführungsbeispiel als Kugeln ausgebildet. Wenn die Kugeln 10 sich im Ventilsitz 13 befinden, wirken sie in dieser Absperrstellung mit dem Dichtring 14 des Ventilsitzes 13 abdichtend zusammen. Den Kugeln 10 sind Druckfedern 15 zugeordnet, mittels welchem sie in Richtung des Ventilsitzes 13 gedrückt werden.

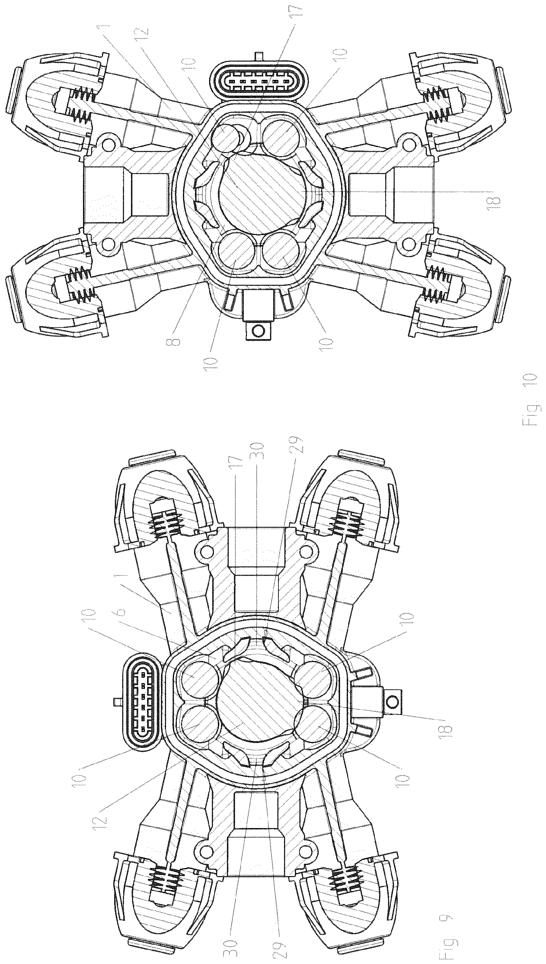

Das schaltbare Betätigungselement 12 ist scheibenartig ausgebildet und drehfest mit einer in dem Gehäuse 1 gelagerten Schaltwelle 16 verbunden. Das Betätigungselement 12 weist mehrere Schaltnocken 17, 18, wie die Fig. 9 und 10 zeigen, auf. Gemäß des Ausführungsbeispiels weist das Betätigungselement 12 zwei Schaltnocken 17, 18 auf. Die Schaltwelle 16 des Betätigungselementes 12 ist mit einem motorischen Stellelement 19, welches als Elektromotor ausgebildet ist, drehfest verbunden und somit über das motorische Stellelement um seine Drehachse verdrehbar.

Einer der beiden Schaltnocken 17 ist so ausgestaltet, dass er nur ein als Kugel 10 ausgebildetes Ventilelement aus dem Ventilsitz 13 drücken kann, so dass der Durchfluss zu einer Verbindungsleitung 7 frei gegeben ist. Der andere der beiden Schaltnocken 18 ist so ausgestaltet, dass er zwei nebeneinander angeordnete als Kugeln 10 ausgebildete Absperrelemente gleichzeitig in eine den Durchfluss in die jeweiligen Verbindungsleitungen 7 freigebenden Stellung bewegen kann, das heißt, dass er gleichzeitig zwei als Kugeln 10 ausgebildete Ventilelemente aus ihren Ventilsitzen 13 drücken kann.

Das Betätigungselement 11 mit den beiden Schaltnocken 19, 20 ist in unterschiedliche Positionen verdrehbar, wie dies für einige mögliche Positionen in den Fig. 9 und 10 dargestellt ist. Wie hieraus ersichtlich ist, werden je nach Schaltstellung des Betätigungselementes 12 der Durchfluss für keine, eine oder mehrere Verbindungsleitungen 7 zu den Ausbringdüsen führenden Ausbringleitungen 8 freigegeben. Somit können wahlweise keiner, einer oder mehrerer Verbindungsleitungen 7 und somit Ausbringdüsen in unterschiedlicher Kombination die auszubringende Flüssigkeit zugeleitet werden.

In dem Abzweigungsbereich 4 ist eine in den freien Querschnitt der Flüssigkeitsleitung 3 hineinragende und die stirnseitige Trennkante 21 aufweisende Zwischenwand 22 angeordnet. Zwischen der Trennkante 21 und der Leitungswand 23 der Flüssigkeitsleitung 3 befindet sich eine zu der Abzweigleitung 5 führende Öffnung 24. Des Weiteren ist auf dem der stirnseitigen Trennkante 21 abgewandten Ende 25 der Zwischenwand 22 eine weitere die Abzweigleitung 26 mit der Flüssigkeitsleitung 3 verbindende Öffnung 26 angeordnet. Die Öffnung 27 an der stirnseitigen Trennkante 21 der Zwischenwand 22 steht mit der weiteren Öffnung 24 an dem Ende 25 der Zwischenwand 22 in Durchflussverbindung. Somit ist von der Abzweigleitung 5 in dem Bereich der Absperrelemente 10 eine weitere mit der Flüssigkeitsleitung 3 verbundene und eine Öffnung 24 zur Flüssigkeitsleitung 3 aufweisende Zwischenleitung 28 zugeordnet.

In der Abzweigleitung 5 ist eine an der stirnseitigen Trennkante 21 beginnende und zu der zu der jeweiligen Ausbringdüse des Düsenkörpers den Flüssigkeitsstrom leitende Führungswand 29 angeordnet. Die Führungswand 29 ist als auf der der Abzweigleitung 5 abgewandten Seite der Zwischenwand 22 kurvenartig verlaufend in Richtung der Ausbringdüse verlaufender Wulst 30 ausgebildet.

Zwischen den beiden Seitenflächen der Betätigungsscheibe 12 und den jeweils benachbarten Gehäusewandungen ist ein von dem Flüssigkeitsstrom durchströmbarer Spaltbereich 32 angeordnet. Die Öffnungen 24 und 28 an der Stirnseite und dem Ende der Zwischenwand 22 sind durch den Spaltbereich 32 zwischen den beiden Seitenflächen der Betätigungsscheibe 12 und den jeweils benachbarten Gehäusewandungen miteinander verbunden.

Durch die den Flüssigkeitsstrom leitende Führungswand 30 wird der Flüssigkeitsstrom zu den an dem Düsenkörper angeordneten Ausbringdüse zugeleitet.

Durch die vorbeschriebene Anordnung der Absperrelemente 10 liegen diese im Bereich des Flüssigkeitsstromes und werden von einem Flüssigkeitsstrom umströmt und/oder umspült, der größer als die über die Ausbringdüse ausgebrachte Flüssigkeitsmenge ist.

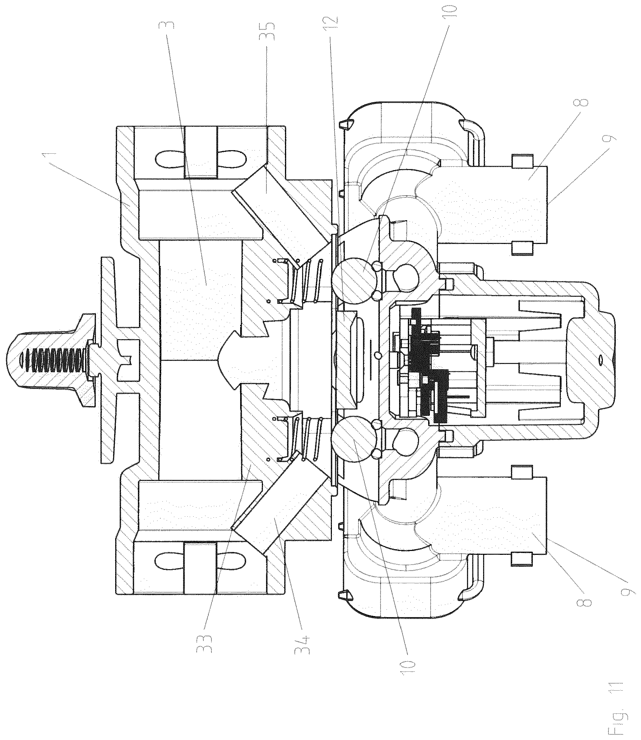

Der Mehrfachdüsenkörper gemäß Fig. 11 unterscheidet sich durch eine andere Ausgestaltung der Anordnung der Zwischenwand 33 und der Abzweigleitung 34 von der Flüssigkeitsleitung 3 sowie der zusätzlichen Verbindungsleitung 35 von der Abzweigleitung 34 zu der Flüssigkeitsleitung 3. Die Anordnung der Absperrelemente 10 über die Betätigungsscheide 12 entspricht dem vorhergehenden Ausführungsbeispiel.

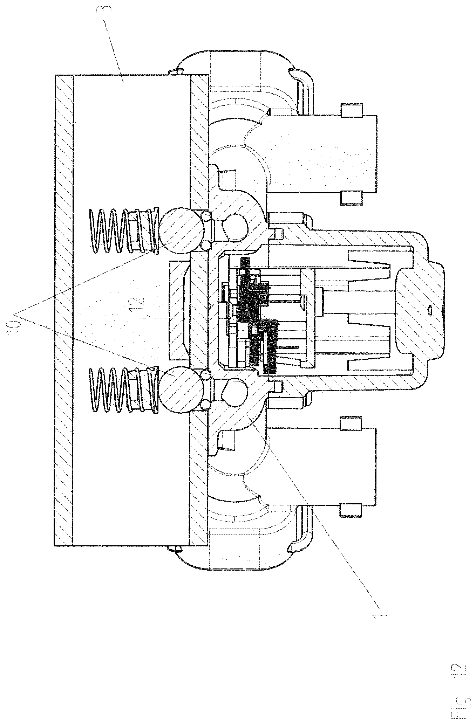

Der Mehrfachdüsenkörper gemäß Fig. 12 unterscheidet sich durch eine andere Anordnung und Lage der Absperrelemente 10. Die Absperrelemente 10 liegen direkt innerhalb der Flüssigkeitsleitung 3 und werden hier von dem Flüssigkeitsstrom direkt umströmt und umspült. So sind die Absperrelemente 10 in einem Bereich des Flüssigkeitsstromes angeordnet, der größer als die über die Ausbringdüse ausgebrachte Flüssigkeitsmenge ist. Die Betätigung der Absperrelemente 10 erfolgt über die Betätigungsscheibe 12, wie zu dem ersten Ausführungsbeispiel beschrieben ist.

## Patentansprüche

1. Flüssigkeitsleitung (3) mit zugeordnetem Düsenkörper, wobei von der zumindest eine Leitungswand aufweisenden Flüssigkeitsleitung (3) in einem Abzweigungsbereich (4) eine Abzweigleitung (5, 34) zu der zumindest einen Ausbringdüse des Düsenkörpers abzweigt, wobei der Abzweigleitung (5) ein Absperrelemente (10) aufweisendes Absperrventil (11) zugeordnet ist, wobei eine Teilmenge des Flüssigkeitsstromes (3) in der Flüssigkeitsleitung in die Abzweigleitung (5, 34) zur Ausbringdüse abzweigt, **dadurch gekennzeichnet, dass** die Absperrelemente (10) in einem Bereich des Flüssigkeitsstromes liegen und von einem Flüssigkeitsstrom umströmt und/oder umspült werden, der größer als die über die Ausbringdüse ausgebrachte Flüssigkeitsmenge ist, dass von der Abzweigleitung (5, 34) in dem Bereich der Absperrelemente (10) eine weitere mit der Flüssigkeitsleitung (3) verbundene und eine Öffnung zur Flüssigkeitsleitung (3) aufweisende Zwischenleitung (28, 35) zugeordnet ist.

2. Flüssigkeitsleitung nach Anspruch 1, **dadurch gekennzeichnet, dass** in dem Abzweigungsbereich (4) zumindest eine in den freien Querschnitt der Flüssigkeitsleitung (3) hineinragende und zumindest eine stirnseitige Trennkante (21) aufweisende Zwischenwand (22) angeordnet ist, dass zwischen der zumindest einen Trennkante (21) und der Leitungswand (23) der Flüssigkeitsleitung (3) zumindest eine zu der zumindest einen Abzweigleitung (5) führende Öffnung sich befindet, dass auf dem der stirnseitigen Trennkante (21) abgewandten Ende (25) der Zwischenwand (22) zumindest eine weitere die Abzweigleitung (5) mit der Flüssigkeitsleitung (3) verbindende Öffnung (26) angeordnet ist.

3. Flüssigkeitsleitung nach Anspruch 2, **dadurch gekennzeichnet, dass** in der Abzweigleitung (5) zumindest eine an der stirnseitigen Trennkante (21) beginnende und zu der zu der jeweiligen Ausbringdüse des Düsenkörpers den Flüssigkeitsstrom leitende Führungswand (29) angeordnet ist.

4. Flüssigkeitsleitung nach zumindest einem der Ansprüche 2 und/oder 3, **dadurch gekennzeichnet, dass** zumindest eine Öffnung (27) an der stirnseitigen Trennkante (21) der Zwischenwand (22) mit zumindest einer weiteren Öffnung (24) an dem Ende (25) der Zwischenwand (22) in Durchflussverbindung steht.

5. Flüssigkeitsleitung nach zumindest einem der Ansprüche 2 bis 4, wobei der Düsenkörper als Mehrfachdüsenkörper ausgebildet ist und über an einer Betätigungsscheibe angeordnete Schaltnocken betätigbare und den an dem Gehäuse des Mehrfachdüsenkörpers angeordnete Ausbringdüsen zugeordnete Absperrventile aufweist, **dadurch gekennzeichnet, dass** zwischen den beiden Seitenflächen der Betätigungsscheibe (12) und den jeweils benachbarten Gehäusewandungen ein von dem Flüssigkeitsstrom durchströmbarer Spaltbereich (31) angeordnet ist, dass die Öffnungen an der Stirnseite und dem Ende der Zwischenwand (22) durch den Spaltbereich (31) zwischen den beiden Seitenflächen der Betätigungsscheibe (12) und den jeweils benachbarten Gehäusewandungen miteinander verbunden sind.

6. Flüssigkeitsleitung nach Anspruch 3, **dadurch gekennzeichnet, dass** durch die zumindest eine den Flüssigkeitsstrom leitende Führungswand (29) der Flüssigkeitsstrom zu der zumindest einen an dem Düsenkörper angeordneten Ausbringdüse leitbar ist.

7. Flüssigkeitsleitung nach Anspruch 3 oder 6, **dadurch gekennzeichnet, dass** die Führungswand (29) als auf der der Abzweigleitung (5, 34) abgewandten Seite der Zwischenwand (22) vorzugsweise kurvenartig verlaufend in Richtung der Ausbringdüse verlaufende Wulst (30) ausgebildet ist.

## Claims

1. Liquid line (3) having an associated nozzle body, wherein a branch line (5, 34) to the at least one dispensing nozzle of the nozzle body branches off in a branching region (4) from the liquid line (3), which liquid line has at least one line wall, wherein the branch line (5) is assigned a shut-off valve (11) having shut-off elements (10), wherein a partial quantity of the liquid stream (3) in the liquid line branches off into the branch line (5, 34) to the dispensing nozzle, **characterized in that** the shut-off elements (10) are situated in a region of the liquid stream and are flowed around and/or flushed around by a liquid stream which is greater than the quantity of liquid dispensed via the dispensing nozzle, and **in that**, from the branch line (5, 34), a further intermediate line (28, 35) which is connected to the liquid line (3) and has an opening to the liquid line (3) is assigned in the region of the shut-off elements (10) .

2. Liquid line according to Claim 1, **characterized in that** at least one intermediate wall (22) projecting into the free cross section of the liquid line (3) and having at least one end-side separating edge (21) is arranged in the branching region (4), **in that** at least one opening leading to the at least one branch line (5) is situated between the at least one separating edge (21) and the line wall (23) of the liquid line (3), and **in that** at least one further opening (26) connecting the branch line (5) to the liquid line (3) is arranged at that end (25) of the intermediate wall (22) which faces away from the end-side separating edge (21).

3. Liquid line according to Claim 2, **characterized in that** at least one guide wall (29), which begins at the end-side separating edge (21) and guides the liquid stream to the respective dispensing nozzle of the nozzle body, is arranged in the branch line (5) .

4. Liquid line according to at least one of Claims 2 and/or 3, **characterized in that** at least one opening (27) at the end-side separating edge (21) of the intermediate wall (22) is in throughflow connection with at least one further opening (24) at the end (25) of the intermediate wall (22).

5. Liquid line according to at least one of Claims 2 to 4, wherein the nozzle body is designed as a multiple-nozzle body and has shut-off valves which are actuable via switching cams arranged on an actuating disc and which are assigned to the dispensing nozzles arranged on the housing of the multiple-nozzle body, **characterized in that** a gap region (31) through which the liquid stream is able to flow is arranged between the two side surfaces of the actuating disc (12) and the in each case adjacent housing walls, and **in that** the openings at the end side and the end of the intermediate wall (22) are connected to one another by way of the gap region (31) between the two side surfaces of the actuating disc (12) and the in each case adjacent housing walls.

6. Liquid line according to Claim 3, **characterized in that**, by way of the at least one guide wall (29) guiding the liquid stream, the liquid stream is able to be guided to the at least one dispensing nozzle arranged on the nozzle body.

7. Liquid line according to Claim 3 or 6, **characterized in that** the guide wall (29) is formed as a bead (30) which runs in the direction of the dispensing nozzle so as to run preferably in a curved manner at that side of the intermediate wall (22) which faces away from the branch line (5, 34).

## Revendications

1. Conduite de liquide (3) comprenant un corps de buse associé, une conduite de dérivation (5, 34) conduisant vers l'au moins une buse de décharge du corps de buse étant déviée dans une région de dérivation (4) à partir de la conduite de liquide (3) présentant au moins une paroi de conduite, une soupape d'arrêt (11) présentant des éléments d'arrêt (10) étant associée à la conduite de dérivation (5), une quantité partielle du flux de liquide (3) dans la conduite de liquide étant déviée dans la conduite de dérivation (5, 34) vers la buse de décharge, **caractérisée en ce que** les éléments d'arrêt (10) sont situés dans une région du flux de liquide et sont enveloppés ou entourés par un flux de liquide qui est plus important que la quantité de liquide évacuée par le biais de la buse de décharge, **en ce que** depuis la conduite de dérivation (5, 34) dans la région des éléments d'arrêt (10) est associée une conduite intermédiaire supplémentaire (28, 35) connectée à la conduite de liquide (3) et présentant une ouverture pour la conduite de liquide (3).

2. Conduite de liquide selon la revendication 1, **caractérisée en ce qu'**au moins une paroi intermédiaire (22) pénétrant dans la section transversale libre de la conduite de liquide (3) et présentant au moins une arête de séparation frontale (21) est disposée dans la région de dérivation (4), **en ce qu'**entre l'au moins une arête de séparation (21) et la paroi de conduite (23) de la conduite de liquide (3) se trouve au moins une ouverture conduisant à l'au moins une conduite de dérivation (5), **en ce qu'**au moins une ouverture supplémentaire (26) reliant la conduite de dérivation (5) à la conduite de liquide (3) est disposée à l'extrémité (25) de la paroi intermédiaire (22) opposée à l'arête de séparation frontale (21).

3. Conduite de liquide selon la revendication 2, **caractérisée en ce qu'**au moins une paroi de guidage (29) commençant au niveau de l'arête de séparation frontale (21) et conduisant le flux de liquide jusqu'à la buse de décharge respective du corps de buse est disposée dans la conduite de dérivation (5).

4. Conduite de liquide selon au moins l'une des revendications 2 et/ou 3, **caractérisée en ce qu'**au moins une ouverture (27) au niveau de l'arête de séparation frontale (21) de la paroi intermédiaire (22) est en liaison d'écoulement de passage avec au moins une ouverture supplémentaire (24) à l'extrémité (25) de la paroi intermédiaire (22).

5. Conduite de liquide selon au moins l'une des revendications 2 à 4, dans laquelle le corps de buse est réalisé sous forme de corps à buses multiples et présente des soupapes d'arrêt pouvant être actionnées par le biais de cames de commutation disposées au niveau d'un disque d'actionnement et associées aux buses de décharge disposées au niveau du boîtier du corps à buses multiples, **caractérisée en ce qu'**entre les deux surfaces latérales du disque d'actionnement (12) et les parois de boîtier respectivement adjacentes est disposée une région de fente (31) pouvant être parcourue par l'écoulement du flux de liquide, **en ce que** les ouvertures sont connectées l'une à l'autre au niveau du côté frontal et à l'extrémité de la paroi intermédiaire (22) entre la région de fente (31) entre les deux surfaces latérales du disque d'actionnement (12) et les parois de boîtier respectivement adjacentes.

6. Conduite de liquide selon la revendication 3, **caractérisée en ce que** le flux de liquide peut être conduit jusqu'à l'au moins une buse de décharge disposée au niveau du corps de buse à travers l'au moins une paroi de guidage (29) guidant le fluide liquide.

7. Conduite de liquide selon la revendication 3 ou 6, **caractérisée en ce que** la paroi de guidage (29) est réalisée sous forme de bourrelet (30) s'étendant dans la direction de la buse de décharge de préférence sous forme courbe du côté de la paroi intermédiaire (22) opposé à la conduite de dérivation (5, 34).
